# EUROPÄISCHE PATENTSCHRIFT

(11) **EP 1 870 570 B1**
(45) Veröffentlichungstag und Bekanntmachung des Hinweises auf die Patenterteilung: **05.12.2012**
(21) Anmeldenummer: 07109518.6
(22) Anmeldetag: 04.06.2007
(51) Int. Cl.: F01M 11/00

(54) **Einrichtung mit einem Wärmetauscher und einem Flüssigkeitsfilter**
Device with heat exchanger and filter for liquid
Dispositif comprenant un échangeur de chaleur et un filtre pour liquide

(30) Priorität: 16.06.2006 DE 102006027725
(43) Veröffentlichungstag der Anmeldung: 26.12.2007
(73) Patentinhaber: Mahle International GmbH, 70376 Stuttgart (DE)
(72) Erfinder: KIEMLEN, Ralf, 72760, Reutlingen (DE); BAUER, Swen-Juri, 70374, Stuttgart (DE); MONZIE, Benoît, 70499, Stuttgart (DE)
(74) Vertreter: BRP Renaud & Partner

(56) Entgegenhaltungen:
- EP-A1- 1 629 878
- DE-A1- 10 012 461
- DE-A1- 10 351 112
- DE-U1-202004 011 114
- DE-U1-202004 015 748
- DE-U1-202004 016 183
- DE-U1-202005 014 632

## Beschreibung

Die Erfindung betrifft eine Einrichtung mit einem Wärmetauscher und einem Flüssigkeitsfilter für insbesondere die Behandlung von Schmieröl eines Verbrennungsmotors von insbesondere Kraftfahrzeugen nach dem Oberbegriff des Patentanspruchs 1.

Aus der EP 1 629 878 A1 ist eine gattungsgemäße Einrichtung mit einem Wärmetauscher und einem Flüssigkeitsfilter für insbesondere die Behandlung von Schmieröl eines Verbrennungsmotors von insbesondere Kraftfahrzeugen bekannt, bei der der Wärmetauscher aus Metall und andere Bereiche, insbesondere das Gehäuse des Filters aus Kunststoff ausgebildet sind. Zwischen dem Wärmetauscher und dem Filtergehäuse sind Verbindungskanäle für ein in Reihe erfolgendes Durchströmen dieser beiden Behandlungselemente angeordnet sind.

Die Erfindung beschäftigt sich mit dem Problem, eine solche Einrichtung rationell herstellbar zu gestalten.

Gelöst wird dieses Problem in erster Linie bereits durch eine Ausgestaltung nach den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, bei der gattungsgemäßen Einrichtung den aus Metall bestehenden Wärmetauscher derart mit den übrigen, aus Kunststoff bestehenden Teilen der Einrichtung in einem gemeinsamen Flanschbereich zu verbinden, dass die Einrichtung über diesen gemeinsamen Flanschbereich auf ein Aufnahmebauteil dicht mit einzelnen Schrauben aufgeschraubt werden kann. Innerhalb des Flanschbereiches liegen sämtliche Zu- und Abführungskanäle der gattungsgemäßen Einrichtung, wobei diesen Kanälen entsprechende Kanäle in dem Aufnahmebauteil innerhalb des, von dem Flansch umfassten Bereiches vorgesehen sind.

Die nach den Unteransprüchen besonders vorteilhaften und zweckmäßigen Ausgestaltungen der Erfindung werden im Rahmen eines gezeichneten Ausführungsbeispieles noch näher erläutert.

### In der Zeichnung zeigen

- Fig. 1: eine perspektivische Ansicht der Filter-Wärmetauscher-Einrichtung von seitlich unten,
- Fig. 2: eine andere perspektivische seitliche Ansicht der Einrichtung nach Fig. 1 in einer teilweise aufgeschnittenen Darstellung,
- Fig. 3: die Einrichtung nach den Fig. 1, 2 in einer Explosionsdarstellung,
- Fig. 4: einen Schnitt durch die Einrichtung nach Fig. 2 in einer Ebene, durch die die Achsen der Verbindungsrohre zwischen Wärmetauscher und Filter verlaufen,
- Fig. 5: eine perspektivische Ansicht eines plattenförmigen Dichtungselementes,
- Fig. 6: einen Schnitt durch den an die Einrichtung aus Filter und Wärmetauscher angesetzten Dichtungselementes nach Linie VI-VI in Fig. 5.

Die erfindungsgemäße Filter-Wärmetauscher-Einrichtung umfasst ein Filtergehäuse 1 sowie einen einstückig angeformten Aufnahmerahmen 2 mit einem in diesen eingesetzten Wärmetauscher 3. Mit Ausnahme des Wärmetauschers 3, der aus Metall besteht, sind die übrigen Teile dieser Einrichtung aus Kunststoff gefertigt.

Bei dieser gezeichneten und beschriebenen Einrichtung handelt es sich um ein Schmierölfilter-Wärmetauschermodul für einen nicht gezeichneten Verbrennungsmotor eines Kraftfahrzeuges.

Das Filter weist ein topfförmiges Filtergehäuse 1 und einen dieses verschließenden, aufschraubbaren Deckel 4 auf. Innerhalb des Filtergehäuses 1 befindet sich ein austauschbares Ringfilterelement 5, das von zu reinigendem Schmieröl von radial außen nach innen durchströmt wird.

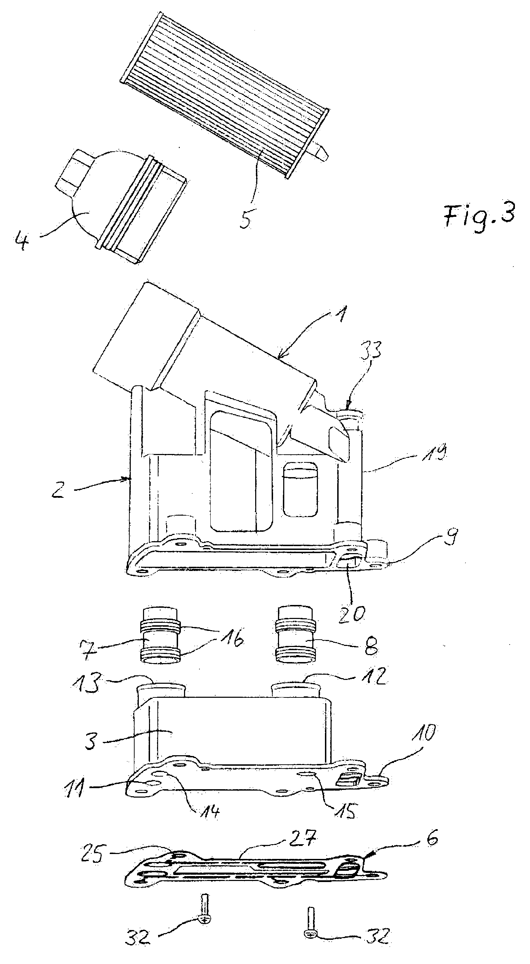

Die einzelnen Teile, aus denen sich die Filter-Wärmetauscher-Einrichtung zusammensetzt, lassen sich recht deutlich der Explosionsdarstellung in Fig. 3 entnehmen. Die bereits vorstehend beschriebenen, einzelnen Elemente sind dort mit den entsprechenden Bezugszahlen versehen. Noch nicht erwähnt ist ein dort unten dargestelltes plattenförmiges Dichtungselement 6.

Ebenfalls bisher nicht erwähnt sind zwei zwischen dem Wärmetauscher 3 und dem Aufnahmerahmen 2 dargestellte Verbindungsrohre, nämlich ein erstes Verbindungsrohr 7 und ein zweites Verbindungsrohr 8. Die Verbindungsrohre 7 und 8 dienen dazu, Verbindungskanäle zwischen Strömungskanälen des Wärmetauschers 3 aus Metall und dem Inneren des Filtergehäuses 1 zu realisieren.

Sowohl der Wärmetauscher 3 als auch der Aufnahmerahmen 2 besitzen jeweils Flansche, die bei einem vollständig in den Aufnahmerahmen 2 eingesetzten Wärmetauscher 3 aufeinander zu liegen kommen. Dabei handelt es sich bei dem Flansch des Aufnahmerahmens 2 um einen Verbindungsflansch 9, während der Flansch an dem Wärmetauscher 3 nachstehend als Anschlussflansch 10 bezeichnet wird. Das Dichtungselement 6 ist plan an den Anschlussflansch 10 des Wärmetauschers 3 anlegbar.

Bei dem Wärmetauscher 3 handelt es sich in dem Ausführungsbeispiel um einen Kühler, in dem in dem Filter des Filtergehäuses 1 zu reinigendes Schmieröl vor dessen Eintritt in das Filter erwärmt werden kann.

Der Wärmetauscher 3 weist einen Strömungskanal für Schmieröl und einen solchen für Kühlwasser auf. Darüber hinaus ist ein Bypass-Strömungskanal vorgesehen, durch den Schmieröl bei einem zu hohen Druckverlust innerhalb des Wärmetauschers 3 direkt, unter Umgehung der Wärmetauschflächen des Wärmetauschers 3 in das Innere des Filtergehäuses 1 zu dem dort vorgesehenen Ringfilterelement 5 rohseitig strömen kann.

Für die Durchströmung des Wärmetauschers 3 tritt das Schmieröl in diesen durch einen Schmieröl-Zuführkanal 11 ein, um nach einem Umströmen der in dem Wärmetauscher 3 vorgesehenen Wärmetauschflächen aus dem Schmierölabflusskanal 12 in Richtung des Filtergehäuses 1 in das dort vorgesehene zweite Verbindungsrohr 8 ausströmen zu können. Der an dem Wärmetauscher 3 vorgesehene Bypass für Schmieröl ist einem an dem Wärmetauscher 3 vorgesehenen Bypass-Austrittskanal 13 zugeordnet. Diesen Bypass-Austrittskanal 13 verbindet mit dem Inneren des Filtergehäuses das erste Verbindungsrohr 7.

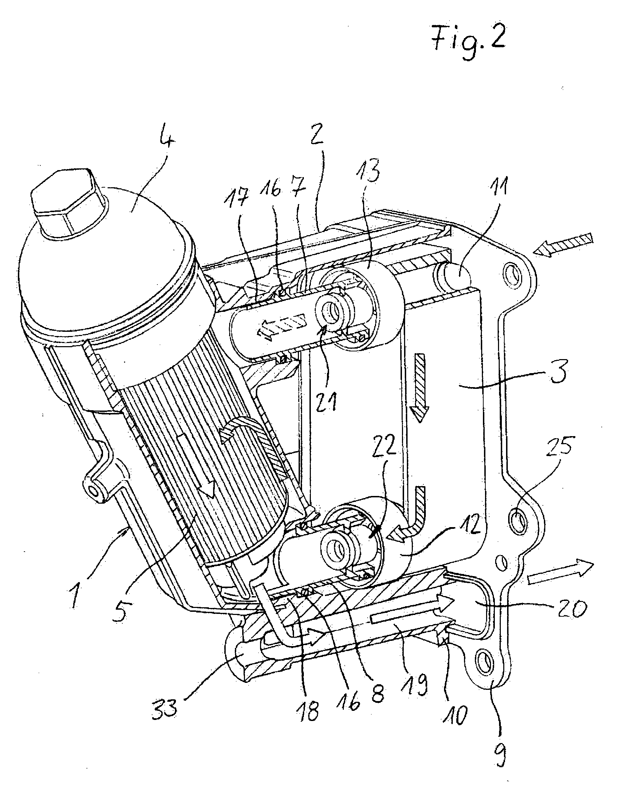

Die Kühlwassereintritts- und -austrittskanäle des Wärmetauschers 3 sind mit 14 und 15 bezeichnet. Die Durchströmung des Wärmetauschers 3 sowie des Filtergehäuses 1 mit Schmieröl ist durch Strömungspfeile in durchgezogene Linien in Fig. 2 markiert. Dabei symbolisieren die dunklen Strömungspfeile das Schmieröl in ungefiltertem und die hellen Strömungspfeile das Schmieröl in gefiltertem Zustand. Der Bypass-Strömungsweg für Schmieröl direkt von der Eingangsseite des Wärmetauschers 3 in das Filtergehäuse 1 markiert ein, aus gestrichelten Linien erzeugter, dunkler Strömungspfeil.

Die Verbindungsrohre 7, 8 sind an ihren axialen Enden jeweils mit Dichtungsringen 16 für eine radiale Dichtung gegenüber Aufnahmen, in die sie einzustecken sind, ausgebildet. Die Aufnahmen bilden an dem Wärmetauscher die Kanäle 12 und 13. An dem Filtergehäuse 1 sind zu diesem Zweck Stutzen 17 und 18 angeformt. Dabei ist der Stutzen 17 dem Verbindungsrohr 7 und der Stutzen 18 dem Verbindungsrohr 8 zugeordnet. Die Verbindungen zwischen den Verbindungsrohren 7 und 8 und ihren zugeordneten Aufnahmen 12, 13 an dem Wärmetauscher und 17, 18 an dem Filtergehäuse sind derart ausgebildet, dass die axialen Enden der Verbindungsrohre 7, 8 jeweils gegenüber den Achsen der Aufnahmen leicht geneigt verlaufen können.

Das Filtergehäuse 1 zusammen mit dem einstückig mit diesem verbundenen Aufnahmerahmen 2 können als Kunststoff-Spritzgussteil einfach hergestellt werden. Das in dem Ringfilterelement 5 gereinigte Schmieröl verlässt das Filtergehäuse durch einen in den Aufnahmerahmen 2 eingeformten Abflusskanal 19. Dieser Abflusskanal 19 führt durch eine Öffnung 20 des Verbindungsflansches 9.

Eine Montage des Wärmetauschers 3 in den Aufnahmerahmen 2 hinein erfolgt in einer äußerst einfachen Weise durch ein einfaches Einschieben des Wärmetauschers 3 in den Aufnahmerahmen 2, wobei die Verbindungsrohre 7, 8 zwischengeschaltet werden.

In den Verbindungsrohren 7 und 8 sind jeweils Ventile vorgesehen, wie aus Fig. 2 zu ersehen ist. Dabei ist in das erste Verbindungsrohr 7 ein Bypassventil 21 und in das zweite Verbindungsrohr 8 ein Rücklaufsperrventil 22 eingesetzt. Die Montage dieser Ventile 21 und 22 in die Verbindungsrohre 7, 8 hinein ist herstellungsmäßig besonders einfach.

Sobald der Wärmetauscher 3 vollständig in den Aufnahmerahmen 2 eingeschoben ist, liegen der Anschlussflansch 10 des Wärmetauschers 3 und der Verbindungsflansch 9 des Aufnahmerahmens 2 plan aufeinander. In dem Anschlussflansch 10 des Wärmetauschers 3 ist eine Durchgangsöffnung zu dem Abflusskanal 19 des Aufnahmerahmens 3 hin vorgesehen und dabei der Öffnung 20 dieses Abflusskanales 19 zugeordnet. Der Abflusskanal 19 kann eine Öffnung 33 für einen Anschluss für einen Flüssigkeitsdruckschalter enthalten.

In dem Aufnahmerahmen 2 ist parallel zu dem Abflusskanal 19 noch ein weiterer, sogenannter Leerlaufkanal 23 für das Filter mit dem Filtergehäuse 1 vorgesehen. Diesem Leerlaufkanal 23 mit einer Öffnung 24 in dem Verbindungsflansch 9 ist in dem Anschlussflansch 10 des Wärmetauschers 3 ebenfalls eine Durchgangsöffnung zugeordnet.

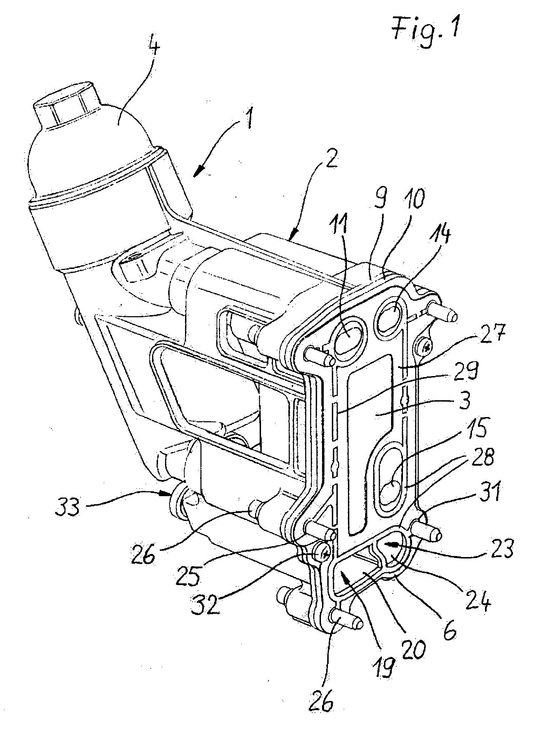

Ein besonderer Vorteil der erfindungsgemäß ausgebildeten Einrichtung besteht darin, dass die beiden Flansche des Aufnahmerahmens 2 sowie des Wärmetauschers 3 mit jeweils fluchtenden Befestigungsöffnungen 25 versehen sind. Hierdurch ist es möglich, mit gleichen, in der Zeichnung insbesondere in Fig. 1 deutlich erkennbaren Befestigungsschrauben 26 beide Flansche untereinander und mit einem in der Zeichnung nicht dargestellten Aufnahmeteil zu verbinden. In dem gezeichneten und beschriebenen Beispiel handelt es sich bei diesem nicht dargestellten Aufnahmebauteil um einen Verbrennungsmotorblock.

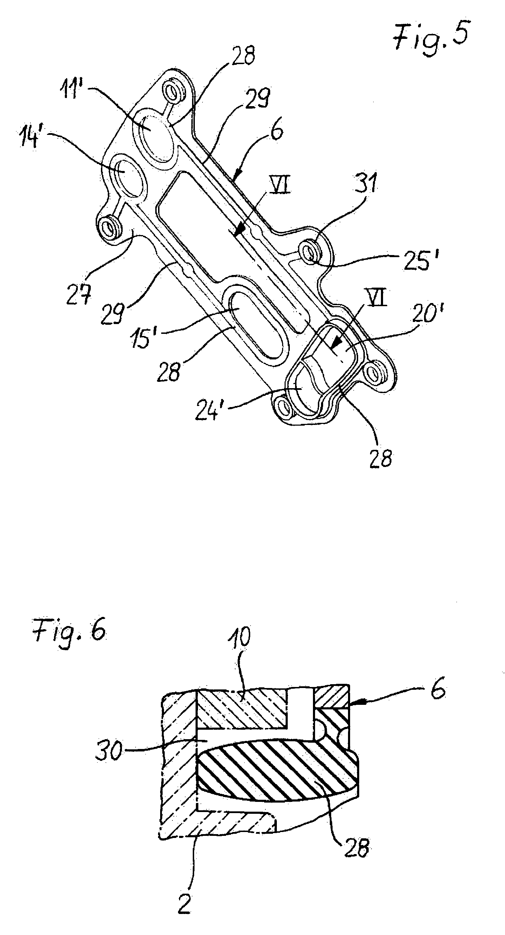

Für eine Dichtheit der Verbindung der Flansche 9 und 10 mit dem Anschlussbauteil sorgt das Dichtungselement 6, das als Einzelteil in Fig. 5 dargestellt ist.

Dieses Dichtungselement 6 besteht aus einem starren Träger 27 insbesondere aus Metall. Dieser Träger 27 besitzt Öffnungen, die jeweils den in den Flanschen 9 und 10 vorgesehenen Strömungsöffnungen zugeordnet sind. Diese Öffnungen sind in der Zeichnung belegt mit Bezugszahlen, die denjenigen der Öffnungen in den Flanschen 9 und 10 entsprechen und zum Unterschied lediglich mit einem Strichindex versehen sind.

Die Öffnungen für durchzuführende Flüssigkeitsströme sind jeweils mit einem Dichtring eingefasst. Diese Dichtringe bestehen aus einem einstückigen, elastischen Dichtringmaterial 28. Damit das Dichtringmaterial 28 in einem möglichst großen Umfang einstückig und damit möglichst alle Dichtringe umfassend ausgebildet werden kann, sind in dem Träger 27 des Dichtungselementes 6 Verbindungskanäle 29 vorgesehen. Hergestellt wird das Dichtringmaterial 28, das heißt dieses Dichtringmaterial 28 wird eingeformt in den Träger 27, indem das Dichtringmaterial 28 in flüssiger Form für eine nachfolgende Verfestigung in die betreffenden Aufnahmebereiche des Trägers 27 eingegeben wird. Zum Eingeben des flüssigen Dichtungsringmaterials 28 wird der Träger 27 in eine geschlossene - hier nicht dargestellte - Form eingelegt. Die Form des verfestigten Dichtringmaterials 28 ist in den Randbereichen der Öffnungen des Trägers 27 derart, dass die aus dem Dichtringmaterial 28 gebildeten Dichtringe axial um ein definiert vorgegebenes Maß den Träger 27 überragen. Diejenigen Dichtringe, die im Rand der Öffnungen 11', 14' und 15' vorgesehen sind, das heißt denjenigen Öffnungen, die direkt dem Anschlussflansch 10 zugeordnet sind, wirken als Axialdichtungen. Ihre Dichtwirkung erhalten sie durch das Verspannen der Flansche 9, 10 über das Dichtungselement 6 auf einem Aufnahmebauteil mittels der Befestigungsschrauben 26. Ein Vorteil dieser Dichtungseinrichtung besteht darin, dass die axial wirkenden Dichtringe axial über ein definiert vorgegebenes Maß elastisch verpresst werden können. Dies ist dadurch möglich, dass der Träger 27 des Dichtungselementes 6 aus starrem Material besteht, sodass ein Anziehen der Befestigungsschrauben 26 unter Verblockung der miteinander verspannten Teile erfolgen kann.

Die Dichtringe innerhalb der Öffnungen 20' und 24' des Trägers 27 des Dichtungselementes 6 müssen zur Erzielung ihrer Dichtwirkung gegenüber den Kanälen 19 und 23 eine axial relativ große Höhe besitzen. Um bei einer solchen, relativ großen axialen Höhe eine sichere Dichtung erhalten zu können, können in den Randbereichen der Öffnungen 19 und 24 in Ringnuten 30 zur Aufnahme komplementär and dem Träger 27 ausgebildeter Dichtringe vorgesehen sein. Auf diese Weise können die Dichtringe an den Öffnungen 20' und 24' des Trägers 27 gleichzeitig axial und radial dichtend wirken.

Für die Aufnahme eines Dichtungs-Ringbundes in einer Ringnut 30 kann eine solche gebildet sein durch ein Zusammenspiel einer von dem Aufnahmerahmen 2 ausgehenden Ringrippe einerseits und des Anschlussflansches 10 des Wärmetauschers 3 andererseits entsprechend der Darstellung in Fig. 6.

In dem Träger 27 dient das dort vorgesehene Dichtringmaterial 28 noch einem zusätzlichen Zweck. Damit die Flansche 9, 10 über ihre Befestigungsöffnungen 25 mit Hilfe der Befestigungsschrauben 26 an einem Aufnahmebauteil befestigt werden können, müssen die Befestigungsschrauben 26 bei einer erfindungsgemäß vorgesehenen Ausbildung des Trägers 27 dort zugeordnete Befestigungs-Öffnungen 25 durchgreifen können. Dies eröffnet die Möglichkeit, diese Öffnungen 25 an ihren Rändern 31 mit Dichtringmaterial 28 zu versehen. Das Dichtringmaterial 28 wird dabei in den Durchgangsöffnungen 25 derart ringförmig eingebracht, dass die Befestigungsschrauben 26, wenn sie durch diese Öffnungen 25 gesteckt werden, einen Klemmschluss gegenüber dem Dichtungsmaterial 28 besitzen. Hierdurch ist das Dichtungselement 6 bei einer Vormontage an der aus Filter und Wärmetauscher 3 bestehenden Einrichtung unverlierbar in einer vorbestimmt gegebenen Einsatztiefe einsetzbar. Hierdurch ist eine einfache Endmontage der Einrichtung an dem Aufnahmebauteil möglich.

Die ringförmige Auskleidung der Durchgangsöffnungen 31 kann vorteilhafterweise derart ausgebildet werden, dass jeweils ein Ringbund einseitig von dem Träger 27 abragt. Diese Ringbünde können jeweils in die Befestigungsbohrungen 26 der Flansche 9 und 10 eingedrückt werden. Dabei kann durch eine entsprechende Abstimmung zwischen der Form der Ringbünde und der Befestigungsöffnungen 26 eine Art Rast- beziehungsweise Schnappverschluss erreicht werden. Hierdurch ergibt sich der Vorteil, das Dichtungselement 6 an den Flanschen 9, 10 vormontieren zu können.

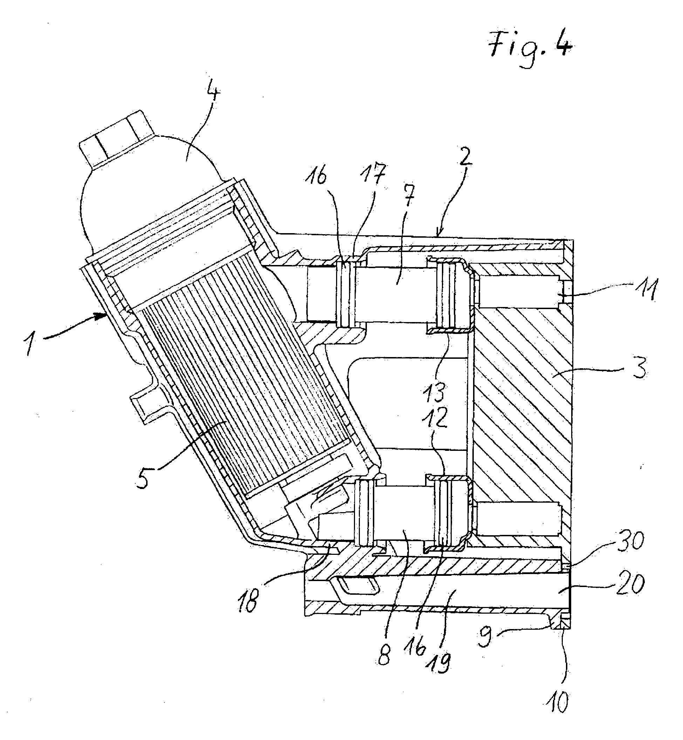

Sicherheitshalber kann der Anschlussflansch 10 des Wärmetauschers 3 auch noch durch Montagesicherungsschrauben 32 (Fig. 1, 3 und 4) mit dem Aufnahmerahmen 2 verbunden sein. Diese Montagesicherungsschrauben 32 dienen, wenn sie vorgesehen sind, lediglich einer Verbindung zwischen Wärmetauscher 3 und Aufnahmerahmen 2 vor der Montage der gesamten Einrichtung auf einem Aufnahmebauteil. Sobald eine Befestigung an dem Aufnahmebauteil über die Befestigungsschrauben 26 erfolgt ist, besitzt der Wärmetauscher 3 zwangsläufig automatisch einen festen Sitz innerhalb des Aufnahmerahmens 2. Die Ränder 31 in der Form von Ringbünden sind einstückiger Bestandteil des Dichtringmaterials 28.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Einrichtung mit einem Wärmetauscher (3) und einem Flüssigkeitsfilter (1) für insbesondere die Behandlung von Schmieröl eines Verbrennungsmotors von insbesondere Kraftfahrzeugen, bei der
- der Wärmetauscher (3) aus Metall und andere Bereiche, insbesondere das Gehäuse des Filters (1) aus Kunststoff ausgebildet sind,
- zwischen dem Wärmetauscher (3) und dem Filtergehäuse (1) Verbindungskanäle für ein in Reihe erfolgendes Durchströmen dieser beiden Behandlungselemente (3, 1) angeordnet sind,
- der Wärmetauscher (3) einen Anschlussflansch (10) mit durch diesen hindurchgehenden Kanälen für, den Wärmetauscher (3) durchströmende Medien aufweist,
- ein Verbindungsflansch (9) für ein planes Anflanschen an ein, Schmierölzu- und -abführkanäle enthaltenes Aufnahmebauteil vorgesehen ist, wobei die Schmierölzu- und -abfuhr durch Öffnungen innerhalb dieses Verbindungsflansches (9) erfolgt,
- ein, den Verbindungsflansch (9) enthaltender Aufnahmerahmen (2) als einstückiger Bestandteil des Filtergehäuses (1) ausgebildet ist,
- durch eine Öffnung des Aufnahmerahmen-Verbindungsflansches (9) der Wärmetauscher (3) in den Aufnahmerahmen (2) einschiebbar ist,
- bei in den Aufnahmerahmen (2) eingeschobenem Wärmetauscher der Anschlussflansch (10) des Wärmetauschers (3) und der Verbindungsflansch (9) des Aufnahmerahmens (2) bei innerhalb des Aufnahmerahmens (2) liegendem Gehäuse des Wärmetauschers (3) plan parallel aufeinander liegen, **gekennzeichnet durch** die Merkmale,
- als Verbindungskanäle zwischen dem Wärmetauscher (3) und dem Filtergehäuse (1) dienen jeweils in Öffnungen einerseits des Filtergehäuses (1) und andererseits des Wärmetauschers (3) einsteckbare Verbindungsrohre (7, 8),
- von den **durch** einerseits den Anschlussflansch (10) des Wärmetauschers (3) und den Verbindungsflansch (9) des Aufnahmerahmens (2) hindurchführenden Kanälen für die Strömungsmedien des Filters (1) und Wärmetauschers (3) ist mindestens ein Verbindungskanal (19) des Filtergehäuses (1) dicht an jeweils eine zugeordnete Kanalöffnung des Aufnahmebauteiles direkt **durch** eine jeweils zugehörige Durchgangsöffnung des Anschlussflansches (10) des Wärmetauschers (3) hindurch dicht anschließbar.

2. Einrichtung nach Anspruch 1,
**dadurch gekennzeichnet,**
**dass** die Verbindungsrohre (7, 8) in den Aufnahmen des Filtergehäuses (1) und Wärmetauschers (3) jeweils geringfügig schwenkbar dicht ein- beziehungsweise aufschiebbar sind.

3. Einrichtung nach Anspruch 2,
**dadurch gekennzeichnet,**
**dass** ein erstes Verbindungsrohr (7) zwischen Wärmetauscher (3) und Filtergehäuse (1) als Schmierölbypass bei dem Filter (1) für, dem Wärmetauscher (3) zuzuführendes Schmieröl dient.

4. Einrichtung nach Anspruch 3,
**dadurch gekennzeichnet,**
**dass** in dem Verbindungsrohr (7) ein Bypassventil (21) vorgesehen ist.

5. Einrichtung nach Anspruch 2,
**dadurch gekennzeichnet,**
**dass** ein zweites Verbindungsrohr (8) zwischen Wärmetauscher (3) und Filtergehäuse (1) der regulären Schmierölzufuhr aus dem Wärmetauscher (3) in das Filtergehäuse (1) dient.

6. Einrichtung nach Anspruch 5,
**dadurch gekennzeichnet,**
**dass** in dem zweiten Verbindungsrohr (8) ein Rücklaufsperrventil (22) vorgesehen ist.

7. Einrichtung nach einem der vorhergehenden Ansprüche,
**dadurch gekennzeichnet,**
**dass** in den Aufnahmerahmen (2) mindestens ein, von dem Innenraum des Filtergehäuses (1) in den Aufnahmerahmen-Verbindungsflansch (9) führender Abflusskanal (19) eingeformt ist.

8. Einrichtung nach einem der vorhergehenden Ansprüche,
**dadurch gekennzeichnet,**
**dass** die aufeinanderliegenden Flansche (9, 10) des Wärmetauschers (3) und des Aufnahmerahmens (2) fluchtende Befestigungsöffnungen (25) für Befestigungsschrauben (26) zum Befestigen der Einrichtung auf dem Aufnahmebauteil besitzen.

9. Einrichtung nach einem der vorhergehenden Ansprüche, mit einem Dichtungselement zum Verbinden mit dem Aufnahmebauteil nach einem der vorhergehenden Ansprüche, bei der das Dichtungselement mehrere elastische Dichtringe zur Dichtung der von der Einrichtung zu dem Aufnahmebauteil führenden Strömungskanäle besitzt,
**gekennzeichnet durch** die Merkmale,
- die Dichtringe sind in einen separaten Träger (27) eingeformt,
- der Träger (27) ist bleibender Bestandteil des Dichtungselementes (6),
- der Träger (27) besteht aus einem, von dem Material der Dichtringe abweichenden, starren Trägermaterial.

10. Einrichtung nach Anspruch 9,
**dadurch gekennzeichnet,**
**dass** von den Dichtringen zumindest diejenigen, die Strömungsöffnungen des Wärmetauschers (3) dichten, als Axialdichtungen zur Verspannung zwischen dem Anschlussflansch (10) des Wärmetauschers (3) einerseits und dem Aufnahmebauteil andererseits ausgebildet sind.

11. Einrichtung nach Anspruch 9 oder 10,
**dadurch gekennzeichnet,**
**dass** Dichtringe, die durch den Aufnahmerahmen (2) geführte Strömungskanäle (19, 23) direkt gegenüber dem Aufnahmebauteil dichten, einen von dem Träger (27) abstehenden Ringbund aufweisen, wobei der Aufnahmerahmen (2) zur Aufnahme eines solchen Ringbundes jeweils eine zugeordnete Ringnut (30) aufweist, wobei diese Ringnut (30) von dem Aufnahmerahmen (2) und dem Anschlussflansch (10) des Wärmetauschers (3) gemeinsam gebildet sein kann.

12. Einrichtung nach Anspruch 10,
**dadurch gekennzeichnet,**
**dass** die Abmessung eines Ringbundes des mit einem solchen zu versehenden Dichtringes und die diejenige der zugeordneten Ringnut (30) des Aufnahmerahmens (2) für eine mindestens zusätzliche, radiale Dichtungskomponente aufeinander abgestimmt sind.

13. Einrichtung nach einem der Ansprüche 9 bis 12,
**dadurch gekennzeichnet,**
**dass** Dichtringe, die bei durch den Anschlussflansch (10) des Wärmetauschers (3) geführten Strömungskanälen direkt dichtend zwischen dem Anschlussflansch (10) des Wärmetauschers (3) und dem Aufnahmebauteil liegen, als axial wirkende Dichtringe ausgebildet sind, wobei sie folgende Merkmale aufweisen
- das elastische Dichtringmaterial (28) überragt axial jeweils den Träger (27),
- die Höhe der beiden axialen Überstände ist unter Berücksichtigung der elastischen Verformbarkeit des Dichtringmaterials (28) derart festgelegt, dass eine sichere Dichtung bei einer Verspannung der gegeneinander zu dichtenden Bauteile durch Abstützen an dem Träger (27) gegeben ist.

14. Einrichtung nach einem der Ansprüche 9 bis 13,
**dadurch gekennzeichnet,**
**dass** mehrere Dichtringe des Dichtungselementes (6) einstückig miteinander verbunden sind.

15. Einrichtung nach einem der Ansprüche 9 bis 14,
**dadurch gekennzeichnet,**
**dass** wenigstens ein Rast- beziehungsweise Schnappverschlussmittel an dem Träger (27) vorgesehen ist, das Bestandteil der einstückig miteinander verbundenen Dichtringe des Dichtungselementes (6) ist.

16. Einrichtung nach Anspruch 15,
**dadurch gekennzeichnet,**
**dass** das Rastverschlussmittel als jeweils ein, einen Rand (31) bildender Ring ausgebildet ist und die fluchtenden Befestigungsöffnungen (25) der Flansche (9, 10) des Wärmetauschers (3) und des Aufnahmerahmens (2) durchgreift.

## Claims

1. A device with a heat exchanger (3) and with a liquid filter (1) in particular for the treatment of lubricating oil of an internal combustion engine of, in particular, motor vehicles, in which
- the heat exchanger (3) is constructed from metal and other regions, in particular the housing of the filter (1) are constructed from plastic,
- between the heat exchanger (3) and the filter housing (1) connecting ducts are arranged for a flowing through of these two treatment elements (3, 1) taking place in series,
- the heat exchanger (3) has a connecting flange (10) with ducts passing therethrough for media flowing through the heat exchanger (3),
- a coupling flange (9) for a flat flange-mounting onto a receiving component containing supply- and removal ducts for lubricating oil, wherein the supply and removal of lubricating oil takes place through openings inside this coupling flange (9),
- a receiving frame (2), containing the coupling flange (9), is constructed as a single-piece component of the filter housing (1),
- the heat exchanger (3) is able to be inserted into the receiving frame (2) through an opening of the receiving frame coupling flange (9),
- when the heat exchanger is inserted into the receiving frame (2), the connecting flange (10) of the heat exchanger (3) and the coupling flange (9) of the receiving frame (2) lie plane-parallel with respect to one another with the housing of the heat exchanger (3) lying inside the receiving frame (2),
**characterized by** the features,
- connecting tubes (7, 8), able to be inserted respectively in openings on the one hand of the filter housing (1) and on the other hand of the heat exchanger (3), serve as connecting ducts between the heat exchanger (3) and the filter housing (1),
- from the ducts for the flow media of the filter (1) and of the heat exchanger (3), leading through on the one hand the connecting flange (10) of heat exchanger (3) and the coupling flange (9) of the receiving frame (2), at least one connecting duct (19) of the filter housing (1) is able to be connected tightly to respectively an associated duct opening of the receiving component directly through a respectively associated through-opening of the connecting flange (10) of the heat exchanger (3).

2. The device according to Claim 1,
**characterized in that**
the connecting tubes (7, 8) are able to be pushed tightly in or respectively on in the mounts of the filter housing (1) and heat exchanger (3) respectively so as to be slightly pivotable.

3. The device according to Claim 2,
**characterized in that**
a first connecting tube (7) between heat exchanger (3) and filter housing (1) serves as a lubricating oil bypass in the filter (1) for lubricating oil which is to be supplied to the heat exchanger (3).

4. The device according to Claim 3,
**characterized in that**
a bypass valve (21) is provided in the connecting tube (7).

5. The device according to Claim 2,
**characterized in that**
a second connecting tube (8) between heat exchanger (3) and filter housing (1) serves for the regular supply of lubricating oil from the heat exchanger (3) into the filter housing (1).

6. The device according to Claim 5,
**characterized in that**
a non-return valve (22) is provided in the second connecting tube (8).

7. The device according to one of the preceding claims,
**characterized in that**
at least one discharge duct (19), leading from the interior of the filter housing (1) into the receiving frame coupling flange (9), is formed into the receiving frame (2).

8. The device according to one of the preceding claims,
**characterized in that**
the flanges (9, 10), of the heat exchanger (3) and of the receiving frame (2), lying on one another, have aligned fastening openings (25) for fastening screws (26) for fastening the device on the receiving component.

9. The device according to one of the preceding claims, with a sealing element for connecting with the receiving component according to one of the preceding claims, in which the sealing element has several elastic sealing rings for the sealing of the flow ducts leading from the device to the receiving component,
**characterized by** the features,
- the sealing rings are formed into a separate carrier (27),
- the carrier (27) is a permanent component of the sealing element (6),
- the carrier (27) consists of a rigid carrier material differing from the material of the sealing rings.

10. The device according to Claim 9.
**characterized in that**
of the sealing rings, at least those which seal flow openings of the heat exchanger (3), are constructed as axial seals for bracing between the connecting flange (10) of the heat exchanger (3) on the one hand and the receiving component on the other hand.

11. The device according to Claim 9 or 10,
**characterized in that**
sealing rings, which seal directly with respect to the receiving component flow ducts (19, 23) guided through the receiving frame (2), have an annular collar projecting from the carrier (27), wherein the receiving frame (2) to receive such an annular collar has respectively an associated annular groove (30), wherein this annular groove (30) can be formed jointly by the receiving frame (2) and the connecting flange (10) of the heat exchanger (3).

12. The device according to Claim 10,
**characterized in that**
the dimension of an annular collar of the sealing ring to be provided with such, and the dimension of the associated annular groove (30) of the receiving frame (2) are coordinated with one another for an at least additional radial sealing component.

13. The device according to one of Claims 9 to 12,
**characterized in that**
sealing rings, which with flow ducts guided through the connecting flange (10) of the heat exchanger (3) lie directly in a sealing manner between the connecting flange (10) of the heat exchanger (3) and the receiving component, are constructed as axially acting sealing rings, wherein they have the following features
- the elastic sealing ring material (28) projects axially over the carrier (27) respectively,
- the height of the two axial projections is established taking into consideration the elastic deformability of the sealing ring material (28) such that a secure seal exists with a bracing of the components, which are to be sealed with respect to one another, by supporting on the carrier (27).

14. The device according to one of Claims 9 to 13,
**characterized in that**
several sealing rings of the sealing elements (6) are connected in one piece with one another.

15. The device according to one of Claims 9 to 14,
**characterized in that**
at least one detent- or respectively snap closure means is provided on the carrier (27), which is a component of the sealing rings of the sealing element (6) which are connected in one piece with one another.

16. The device according to Claim 15,
**characterized in that**
the detent closure means is constructed respectively as a ring forming an edge (31), and engages through the aligned fastening openings (25) of the flanges (9, 10) of the heat exchanger (3) and of the receiving frame (2).

## Revendications

1. Dispositif comportant un échangeur thermique (3) et un filtre de liquide (1) notamment destiné au traitement de l'huile lubrifiante d'un moteur à combustion interne de véhicules automobiles, dans lequel
- l'échangeur thermique (3) est réalisé en métal et d'autres parties, notamment le logement du filtre (1), sont réalisées en plastique,
- entre l'échangeur thermique (3) et le logement de filtre (1) sont disposés des canaux de liaison prévus pour l'écoulement en file à travers ces deux éléments de traitement (3, 1),
- l'échangeur thermique (3) présente une bride de raccordement (10) comportant des canaux passant à travers celle-ci destinés aux milieux s'écoulant à travers l'échangeur thermique (3),
- une bride de liaison (9) prévue pour brider à plat un composant de réceptacle contenant des canaux d'admission et d'échappement d'huile lubrifiante, dans lequel l'admission et l'échappement d'huile lubrifiante a lieu à travers des ouvertures à l'intérieur de cette bride de liaison (9),
- un châssis de réceptacle (2) contenant la bride de liaison (9) est réalisé comme un composant en un seul tenant du logement de filtre (1),
- l'échangeur thermique (3) peut être glissé dans le châssis de réceptacle (2) à travers une ouverture de la bride de liaison de châssis de réceptacle (9),
- sur l'échangeur thermique glissé dans le châssis de réceptacle (2), la bride de raccordement (10) de l'échangeur thermique (3) et la bride de liaison (9) du châssis de réceptacle (2) reposent sur des plans parallèles l'un à l'autre sur le logement de l'échangeur thermique (3) se trouvent à l'intérieur du châssis de réceptacle (2), **caractérisé par** les caractéristiques
- les tuyaux de liaison (7, 8) enfichables respectivement dans les ouvertures d'une part du logement de filtre (1) et d'autre part de l'échangeur thermique (3) servent de canaux de liaison entre l'échangeur thermique (3) et le logement de filtre (1),
- parmi les canaux destinés aux milieux s'écoulant à travers le filtre (1) et l'échangeur thermique (3) guidés à travers d'une part la bride de raccordement (10) de l'échangeur thermique (3) et la bride de liaison (9) du châssis de réceptacle (2), au moins un canal de liaison (19) du logement de filtre (1) peut être raccordé de manière étanche à respectivement une ouverture de canal coordonnée du composant de réceptacle directement à travers une ouverture traversante respectivement correspondante de la bride de raccordement (10) de l'échangeur thermique (3).

2. Dispositif selon la revendication 1,
**caractérisé en ce que**
les tuyaux de liaison (7, 8) sont glissés de manière étanche dans, respectivement sur les réceptacles du logement de filtre (1) et de l'échangeur thermique (3) de manière à basculer au minimum.

3. Dispositif selon la revendication 2,
**caractérisé en ce que**
un premier tuyau de liaison (7) entre l'échangeur thermique (3) et le logement de filtre (1) sert de dérivation de lubrifiant sur le filtre (1) pour l'huile lubrifiante à alimenter dans l'échangeur thermique (3).

4. Dispositif selon la revendication 3,
**caractérisé en ce que**
une soupape de dérivation (21) est prévue dans le tuyau de liaison (7).

5. Dispositif selon la revendication 2,
**caractérisé en ce que**
un deuxième tuyau de liaison (8) entre l'échangeur thermique (3) et le logement de filtre (1) sert à l'alimentation régulière en huile depuis l'échangeur thermique (3) dans le logement de filtre (1).

6. Dispositif selon la revendication 5,
**caractérisé en ce que**
un clapet anti-retour (22) est prévu dans le deuxième tuyau de liaison (8).

7. Dispositif selon une des revendications précédentes,
**caractérisé en ce que**
dans le châssis de réceptacle (2), au moins un canal d'évacuation (19) menant de l'espace intérieur du logement de filtre (1) à la bride de liaison du châssis de réceptacle (9) est façonné.

8. Dispositif selon une des revendications précédentes,
**caractérisé en ce que**
les brides (9, 10) venant reposer l'une sur l'autre de l'échangeur thermique (3) et du châssis de réceptacle (2) possèdent des ouvertures de fixation (25) alignées destinées à des vis de fixation (26) pour fixer le dispositif sur le composant de réceptacle.

9. Dispositif selon une des revendications précédentes, comportant un élément d'étanchéité pour relier au composant de réceptacle selon une des revendications précédentes, dans lequel l'élément d'étanchéité possède plusieurs bagues d'étanchéité élastique pour rendre étanche les canaux d'écoulement menant du dispositif au composant de réceptacle,
**caractérisé par** les caractéristiques
- les bagues d'étanchéité sont façonnées dans un support séparé (27),
- le support (27) est le composant restant de l'élément d'étanchéité (6),
- le support (27) est constitué d'un matériau porteur rigide, différant du matériau des bagues d'étanchéité.

10. Dispositif selon la revendication 9,
**caractérisé en ce que**
parmi les bagues d'étanchéité, au moins celles, qui rendent étanches les ouvertures d'écoulement de l'échangeur thermique (3), sont réalisées comme des joints d'étanchéité axiaux permettant une compression entre la bride de raccordement (10) de l'échangeur thermique (3) d'une part et le composant de réceptacle.

11. Dispositif selon les revendications 9 ou 10,
**caractérisé en ce que**
les bagues d'étanchéité, qui rendent étanches les canaux d'écoulement (19, 23) guidés à travers le châssis de réceptacle (2) directement par rapport au composant de réceptacle, présentent un collier en saillie par rapport au support (27), dans lequel le châssis de réceptacle (2) présente afin de recevoir un tel collier respectivement une rainure annulaire (30) coordonnée, dans lequel cette rainure annulaire (30) peut être formée conjointement par le châssis de réceptacle (2) et la bride de raccordement (10) de l'échangeur thermique (3).

12. Dispositif selon la revendication 10,
**caractérisé en ce que**
les dimensions d'un collier d'une bague d'étanchéité devant être pourvue de ce dernier et celles de la rainure annulaire coordonnée (30) du châssis de réceptacle (2) sont harmonisées l'une à l'autre pour au moins un composant d'étanchéité radial supplémentaire.

13. Dispositif selon une des revendications 9 à 12,
**caractérisé en ce que**
les bagues d'étanchéité, qui reposent dans le cas des canaux d'écoulement guidés à travers la bride de raccordement (10) de l'échangeur thermique (3) de manière étanche entre la bride de raccordement (10) de l'échangeur thermique (3) et le composant de réceptacle, sont réalisés comme des bagues d'étanchéité agissant axialement, dans lequel elles présentent les caractéristiques suivantes
- le matériau de bague d'étanchéité élastique (28) surplombe axialement respectivement le support (27),
- la hauteur des deux saillies axiales est déterminée en prenant en compte la déformabilité élastique du matériau de bague d'étanchéité (28) de telle sorte qu'une étanchéité sécurisée soit induite lors d'une compression des composants à rendre mutuellement étanches par appui sur le support (27).

14. Dispositif selon une des revendications 9 à 13,
**caractérisé en ce que**
plusieurs bagues d'étanchéité de l'élément de joint d'étanchéité (6) sont reliées les unes aux autres en un seul tenant.

15. Dispositif selon une des revendications 9 à 14,
**caractérisé en ce que**
au moins un moyen de fermeture par verrouillage, respectivement par encliquetage est prévu sur le support (27), qui est un composant des bagues d'étanchéité reliées en un seul tenant de l'élément de joint d'étanchéité (6).

16. Dispositif selon la revendication 15,
**caractérisé en ce que**
le moyen de fermeture par verrouillage est respectivement réalisé comme une bague formant un bord (31) et s'engage à travers les ouvertures de fixation (25) alignées de la bride (9, 10) de l'échangeur thermique (3) et du châssis de réceptacle (2).
